**Europäisches Patentamt**

**European Patent Office**

**Office européen des brevets**

(19)

(11) Numéro de publication : **0 452 221 B1**

(12) **FASCICULE DE BREVET EUROPEEN**

(45) Date de publication du fascicule du brevet :
**31.05.95 Bulletin 95/22**

(21) Numéro de dépôt : **91400975.8**

(22) Date de dépôt : **11.04.91**

(51) Int. Cl.⁶ : **G01S 13/92**, G01S 13/87

(54) **Dispositif cinémométrique embarqué.**

(30) Priorité : **13.04.90 FR 9004843**

(43) Date de publication de la demande :
**16.10.91 Bulletin 91/42**

(45) Mention de la délivrance du brevet :
**31.05.95 Bulletin 95/22**

(84) Etats contractants désignés :
**BE CH DE IT LI**

(56) Documents cités :
**GB-A- 2 004 158**
**US-A- 3 118 139**
**US-A- 4 335 382**

(73) Titulaire : **SOCIETE DE FABRICATION D'INSTRUMENTS DE MESURE (S.F.I.M.)
13, avenue Marcel Ramolfo-Garnier
F-91344 Massy Cédex (FR)**

(72) Inventeur : **Preti, Jean-Claude
8, Petit Chemin de la Marinière
F-91370 Verrieres le Buisson (FR)**

(74) Mandataire : **Schrimpf, Robert et al
Cabinet Regimbeau
26, Avenue Kléber
F-75116 Paris (FR)**

EP 0 452 221 B1

## Description

La présente invention concerne un dispositif cinémométrique destiné à mesurer la vitesse absolue V d'un véhicule à contrôler, comportant, embarqués à bord d'un véhicule de contrôle, un premier cinémomètre pour mesurer la vitesse de référence $V_R$ dudit véhicule de contrôle et un deuxième cinémomètre, à effet Doppler, pour mesurer la vitesse relative dV dudit véhicule à contrôler par rapport au véhicule de contrôle lors d'un dépassement du véhicule de contrôle par le véhicule à contrôler, des moyens de calcul fournissant la vitesse absolue V cherchée par la relation $V = V_R + dV$.

Le dispositif cinémométrique, objet de l'invention, trouve une application particulièrement avantageuse dans le domaine du contrôle, par les forces de police, de la vitesse des véhicules se déplaçant sur la voie publique afin, le cas échéant, de faire respecter les limitations de vitesse correspondantes en fonction des nécessités du trafic routier.

Les cinémomètres actuellement utilisés pour mesurer la vitesse des véhicules circulant sur une route, une autoroute, ou encore sur un circuit de compétition sont généralement constitués par des appareils fonctionnant selon le principe de l'effet Doppler dans la gamme des ondes millimétriques. Ces dispositifs cinémométriques, disposés à proximité immédiate de la voie de circulation considérée, émettent une onde électromagnétique qui est ensuite réfléchie par le véhicule en mouvement dont on veut mesurer la vitesse. Lorsque ce véhicule présente par rapport à l'appareil de mesure une vitesse radiale non nulle, la fréquence de l'onde électromagnétique, reçue par le cinémomètre après réflexion, subit un décalage, appelée fréquence Doppler, directement proportionnelle à la vitesse cherchée. La détermination de ce décalage de fréquence, par battement par exemple entre les ondes émise et réfléchie, constitue donc une mesure de la vitesse du véhicule à contrôler.

Toutefois, ce type d'appareillage, décrit par ailleurs dans la demande de brevet français n° 74 24810, n'est pas exempt d'inconvénients. En particulier, posé sur le sol à quelques mètres du bord de la chaussée, il peut être facilement repéré, de même que les représentants des forces de police chargés d'effectuer les contrôles. Ce manque de discrétion a pour conséquence de limiter considérablement l'efficacité de tels cinémomètres, et ce d'autant plus que les conducteurs des véhicules s'approchant de la zone de contrôle sont souvent avertis par ceux qui, circulant en sens contraire, en ont décélé la présence.

Aussi, pour remédier à cet inconvénient, il a été proposé un dispositif cinémométrique du type de celui décrit dans le préambule, qui présente l'avantage de pouvoir être complètement embarqué à bord d'un véhicule de contrôle. Ce véhicule, banalisé, circulant lui-même au milieu du trafic sur l'axe routier mis sous surveillance, ne peut absolument pas être repéré par les autres usagers.

Les dispositifs cinémométriques embarqués actuellement utilisés comportent un premier cinémomètre du type tachymétrique donnant une estimation de la vitesse de référence du véhicule de contrôle, et un deuxième cinémomètre, à effet Doppler, analogue aux cinémomètres fixes, qui mesure la vitesse relative dV du véhicule à contrôler par rapport au véhicule de contrôle.

Ces dispositifs connus à mesure tachymétrique de la vitesse de référence n'offrent cependant pas toujours la précision exigée pour ce genre d'appareils, compte tenu des conséquences juridiques que les contrôles de vitesse peuvent entraîner. En effet, les tachymètres installés sur l'arbre du moteur n'enregistrent que la vitesse de rotation des roues, la détermination de la vitesse linéaire du véhicule restant tributaire de paramètres aléatoires non maîtrisés comme l'usure et la pression des pneumatiques.

Aussi, le problème technique à résoudre par l'objet de la présente invention est de fournir un dispositif cinémométrique conforme au préambule qui garantirait une précision élevée de la vitesse mesurée, compatible avec l'application au contrôle du trafic routier.

On connaît déjà par le document US-1 118 139 un dispositif cinémométrique destiné à mesurer la vitesse absolue d'un véhicule à contrôler, comportant, embarqué à bord d'un véhicule de contrôle, un premier cinémomètre, à effet Doppler, pour mesurer la vitesse de référence $V_R$ de véhicule de contrôle, et un deuxième cinémomètre, à effet Doppler, pour mesurer la vitesse relative dV du véhicule à contrôler par rapport au véhicule de contrôle lors d'un dépassement du véhicule de contrôle par le véhicule à contrôler, ce dispositif comportant également des moyens reliés aux premier et deuxième cinémomètres pour fournir en fonction des mesures desdits cinémomètres une visualisation de la vitesse absolue du véhicule à contrôler.

La solution au problème technique posé consiste, selon la présente invention, en ce que ces moyens comprennent des moyens de calcul qui comportent deux voies, l'une qui traite le signal provenant du premier cinémomètre et qui comprend une mémoire vive dans laquelle la vitesse de référence calculée est stockée, l'autre qui traite le signal provenant du deuxième cinémomètre et qui comprend des moyens pour détecter le signe de la vitesse relative mesurée par le deuxième cinémomètre, ces moyens de calcul comportant également des moyens formant interrupteurs commandés par ces moyens de détection de signe et qui commandent eux-mêmes la première et la deuxième voie de calcul pour :

- que la vitesse de référence stockée dans la mémoire vive soit mise à jour de façon permanente, lorsque le signe de la vitesse relative est négatif;

- que la mise à jour de la vitesse de référence
  soit suspendue lorsque le signe de la vitesse
  relative est positif,

les moyens de calcul comportant des moyens additionneurs pour additionner alors la vitesse de référence stockée dans la mémoire vive de la première voie
et la vitesse relative calculée par la deuxième voie,
ces moyens additionneurs fournissant à un dispositif
de visualisation la vitesse absolue cherchée.

Ainsi, lorsque le véhicule de contrôle n'est pas
dépassé par un autre véhicule, le deuxième cinémomètre n'enregistre que des vitesses relatives négatives correspondant au défilement du décor et au mouvement des véhicules circulant en sens contraire.
Dans cet état de fonctionnement du dispositif cinémométrique selon l'invention, le premier cinémomètre
fournit une mesure de la vitesse de référence $V_R$, par
effet Doppler inverse par rapport au défilement du sol
par exemple, tandis que le deuxième cinémomètre,
associé à une unité de traitement, fournit un signal
Doppler correspondant au mouvement relatif des
deux véhicules considérés. Quand un véhicule dépassant le véhicule de contrôle entre dans le champ
de mesure du deuxième cinémomètre, un signal positif de vitesse est détecté, ce qui a pour effet de suspendre le calcul de la vitesse de référence $V_R$ dont la
dernière valeur mesurée avant interruption est
stockée dans une mémoire vive du dispositif. Les
moyens de calcul fournissent alors, pendant toute la
durée de la traversée du champ de mesure par le véhicule dépassant à contrôler, des valeurs de la vitesse relative dV qui, ajoutées à la vitesse de référence
$V_R$ mémorisée, permettent d'atteindre la vitesse absolue V cherchée avec une précision supérieure à 1
% sur toute la gamme des vitesses mesurées. Lorsque le véhicule à contrôler sort du champ de mesure,
le deuxième cinémomètre fournit à nouveau un signe
de vitesse relative négatif qui inhibe le calcul de la vitesse relative dV par les moyens de calcul, lesquels
effectuent à nouveau la mesure de la vitesse de référence $V_R$.

La description qui va suivre en regard des dessins annexés, donnés à titre d'exemples non limitatifs, fera bien comprendre en quoi consiste l'invention
et comment elle peut être réalisée.

La figure 1a est un schéma synoptique d'un dispositif cinémométrique selon l'invention.

La figure 1b est une vue de côté du véhicule de
contrôle de la figure 1a.

La figure 2 est un schéma des moyens de calcul
du dispositif cinémométrique de la figure 1a.

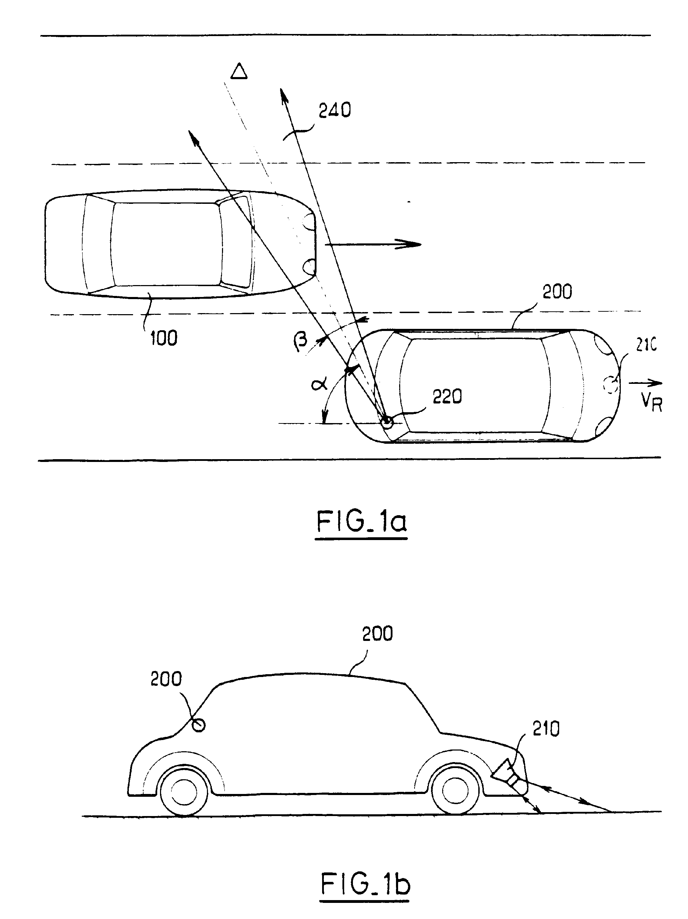

La figure 1a représente, sur un schéma synoptique, un dispositif cinémométrique destiné à mesurer
la vitesse absolue V d'un véhicule 100 à contrôler. Ce
dispositif comprend, embarqué à bord d'un véhicule
200 de contrôle, un premier cinémomètre 210 à effet Doppler pour mesurer la vitesse de référence $V_R$ dudit
véhicule 200 de contrôle. Ce cinémomètre 210 est,
par exemple, et comme le montre la figure 1b, placé
dans le véhicule de contrôle de façon à pouvoir mesurer la vitesse $V_R$ par effet Doppler inverse par rapport au défilement du sol. Bien entendu, le premier cinémomètre devra être installé à un endroit du véhicule de contrôle suffisamment discret pour éviter d'être
repéré. Un deuxième cinémomètre 220 à effet Doppler, également embarqué à l'intérieur du véhicule
200 de contrôle, est prévu pour mesurer la vitesse relative dV du véhicule 100 à contrôler par rapport au
véhicule 200 de contrôle. A la différence près que
dans le dispositif de mesure de vitesse montré à la figure 1a, le deuxième cinémomètre 220 est mobile et
non fixe, ce dernier fonctionne de façon tout à fait
analogue au cinémomètre décrit dans la demande de
brevet français n° 87 12787 au nom de la Demanderesse, laquelle est inclue par référence à la présente
demande. Dans le mode de réalisation des figures 1a
et 1b, le deuxième cinémomètre 220 est installé sur
la plage arrière du véhicule 200 de contrôle et émet,
comme le premier cinémomètre 210, un faisceau
d'onde millimétrique, de 12,5 mm de longeur d'onde
par exemple. Le faisceau 240 de mesure issu du
deuxième cinémomètre est centré autour d'une direction Δ faisant un angle α avec l'axe du véhicule 200
de contrôle. Typiquement, la largeur du faisceau 240
est de l'ordre de 10°. Les signaux Doppler fournis par
les premier 210 et deuxième 220 cinémomètres sont
ensuite traités par des moyens de calcul 230 de façon
à obtenir la vitesse absolue V cherchée à l'aide de la
relation $V = V_R + dV$.

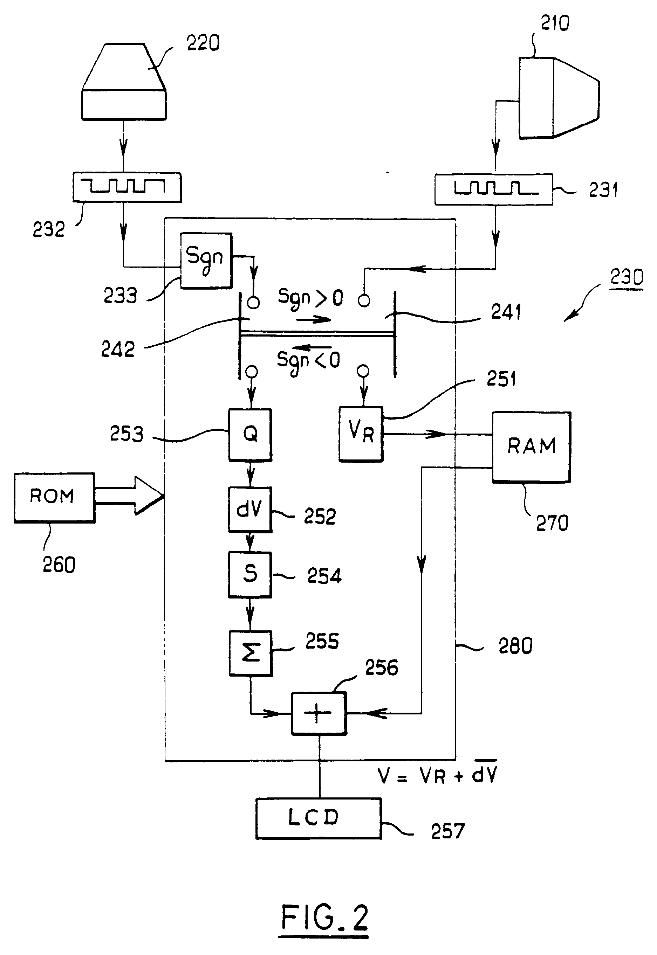

Ces moyens de calcul 230, schématisés sur la figure 2, comprennent essentiellement deux voies.
Une première voie concerne le signal provenant du
premier cinémomètre 210. L'onde millimétrique émise par ledit premier cinémomètre est réfléchie par le
sol et renvoyée vers le premier cinémomètre avec un
décalage de fréquence, appelée fréquence Doppler,
directement proportionnel à la vitesse de référence
$V_R$. Le signal analogique correspondant à l'onde réfléchie est d'abord numérisé par une première unité
231 de traitement numérique avant d'être envoyé
vers un microprocesseur 280.

Sur une deuxième voie, ledit microprocesseur
280 reçoit également un signal Doppler, numérisé par
une deuxième unité 232 de traitement numérique, et
correspondant à l'onde millimétrique réfléchie par le
véhicule 100 à contrôler. De préférence, le message
fourni par ladite deuxième unité 232 de traitement numérique comprend 16 bits dont un bit dit "de sens",
donnant le signe de la vitesse relative dV enregistrée
par le deuxième cinémomètre 220. Le bit de sens est
détecté par un moyen 233 qui commande un moyen
logique représenté de façon tout à fait symbolique par
les interrupteurs couplés 241-242.

Lorsque le signe de la vitesse relative dV est négatif, aucun véhicule à contrôler ne dépasse le véhicule de contrôle, l'interrupteur 242 est ouvert et le calcul de la vitesse relative dV n'est pas effectué par le moyen de calcul 252, tandis que, l'interrupteur 241 étant fermé, le signal issu de la première unité 231 de traitement numérique parvient jusqu'au moyen 251 de calcul de la vitesse de référence $V_R$, dont la valeur est stockée dans une mémoire vive 270. La valeur ainsi mémorisée de la vitesse de référence $V_R$ est mise à jour en permanence, l'opération de calcul/stockage étant effectuée au rythme de la fréquence le récurrence des moyens de calcul.

Il faut noter dès à présent que les moyens dont il est question dans le mémoire sont essentiellement constitués par des mémoires et par des logiciels exécutés par le microprocesseur 280, même s'ils peuvent être remplacés par des circuits de logique cablée. Ces divers logiciels ne seront pas décrits en détail car ils font appel à des techniques de programmation tout à fait classiques à la portée de l'homme du métier. De façon schématique, les logiciels utilisés sont stockés dans la mémoire morte 260.

Au moment où un véhicule effectue un dépassement du véhicule de contrôle, le bit de sens du signal devient positif et le moyen de détection 233 fait basculer le circuit logique 241-242 dans la position où l'interrupteur 241 est ouvert, suspendant ainsi le calcul de la vitesse de référence $V_R$, et où l'interrupteur 242 est fermé. Le calcul de la vitesse relative dV est alors réalisé par le moyen de calcul 252. Si on le désire, le signal de 16 bits fourni par la deuxième unité 232 de traitement numérique comporte un bit dit "de qualité" qui permet de valider ou non la mesure de vitesse. En sortie du moyen logique 241-242, un moyen 253 de contrôle de la valeur dudit bit de qualité transmet le signal au moyen 252 de calcul de la vitesse relative dV si le bit de qualité vaut 1. Par contre, si le bit de qualité vaut 0, la mesure est rejetée jusqu'à la mesure suivante qui a lieu lorsque le véhicule à contrôler a parcouru une certaine distance $\Delta \ell$ . En effet, le dispositif cinémométrique selon l'invention présente la particularité de fonctionner à une fréquence d'horloge égale à la fréquence Doppler. Comme la fréquence Doppler Fd est une fonction linéaire de la vitesse du type

$$Fd = \frac{2V}{\lambda} \cos \alpha$$

on constate que les mesures successives ne se font pas pour des intervalles de temps déterminés mais pour des distances parcourus données $\Delta \ell$ , ce qui conduit à disposer d'un nombre de points de mesure constants indépendants de la vitesse. A titre d'exemple numérique, la distance $\Delta \ell$ entre deux mesures peut être de 11 mm, ce qui pour une traversée de faisceau de 3 m donne environ 270 points de mesure.

De façon à prendre en compte d'éventuelles variations brutales, accélérations ou décélérations, du véhicule de contrôle, les moyens de calcul 230 comportent des moyens 254 de discrimination qui éliminent de la mesure des valeurs successives de la vitesse relative dV dont la différence est supérieure à un seuil S donné. Cette caractéristique constitue un avantage sensible par rapport aux dispositifs tachymétriques connus qui ont un temps de réponse beaucoup trop long pour qu'une telle disposition puisse être envisagée.

Enfin, un moyen de formation 255 effectue la moyenne $\overline{dV}$ de toutes les valeurs de la vitesse relative dV après validation et discrimination. Cette moyenne est ensuite additionnée à la dernière valeur de la vitesse de référence $V_R$ stockée dans la mémoire vive 270 par un moyen additionneur 256 qui fournit la vitesse absolue V cherchée dont la valeur est affichée sur un dispositif de visualisation, à cristaux liquides par exemple.

Après sortie du véhicule à contrôler de la zone de mesure, le moyen 233 détecte à nouveau une vitesse relative de signe négatif. Le moyen logique 241-242 bascule alors dans la position bloquant la mesure de la vitesse relative dV et permettant la reprise du calcul de la vitesse de référence $V_R$.

De façon à n'émettre l'onde millimétrique que lorsque le véhicule à contrôler se trouve à proximité du faisceau de mesure, le deuxième cinémomètre comporte au moins un capteur passif, infrarouge et/ou acoustique, non représenté sur la figure 1a, commandant des moyens d'enclenchement/déclenchement dudit deuxième cinémomètre. Ce capteur passif ainsi que son mode de fonctionnement est décrit très en détail dans la demande de brevet français n° 87 12787.

Il est bien entendu que le dispositif cinémométrique, objet de l'invention, peut également fonctionner à l'arrêt, c'est-à-dire à vitesse de référence $V_R$ nulle. La vitesse V du véhicule à contrôler cherchée est alors égale à la vitesse relative dV mesurée par le second cinémomètre.

**Revendications**

1. Dispositif cinémométrique destiné à mesurer la vitesse absolue (V) d'un véhicule (100) à contrôler, comportant, embarqué à bord d'un véhicule (200) de contrôle, un premier cinémomètre (210) à effet Doppler pour mesurer la vitesse de référence ($V_R$) dudit véhicule (200) de contrôle et un deuxième cinémomètre (220) à effet Doppler pour mesurer la vitesse relative (dV) dudit véhicule à contrôler par rapport au véhicule (200) de contrôle lors d'un dépassement du véhicule (200) de contrôle par le véhicule (100) à contrôler, des moyens (231, 232, 230, 257) reliés aux premier et deuxième cinémomètres (210, 220) pour fournir en fonction des mesures desdits cinémomètres (210, 220) une visualisation de la vitesse absolue du véhicule à contrôler, caractérisé en ce que ces moyens comprennent des moyens de calcul (230) qui comportent deux voies, l'une qui traite le signal provenant du premier cinémomètre (210) et qui comprend une mémoire vive (270) dans laquelle la vitesse de référence (VR) calculée est stockée, l'autre qui traite le signal provenant du deuxième cinémomètre (220) et qui comprend des moyens (233) pour détecter le signe de la vitesse relative (dV) mesurée par le deuxième cinémomètre, ces moyens de calcul comportant également des moyens formant interrupteurs (241, 242) commandés par ces moyens de détection de signe (233) et qui commandent eux-mêmes la première et la deuxième voie de calcul pour :

- que la vitesse de référence (VR) stockée dans la mémoire vive (270) soit mise à jour de façon permanente, lorsque le signe de la vitesse relative (dV) est négatif;
- que la mise à jour de la vitesse de référence (VR) soit suspendue lorsque le signe de la vitesse relative (dV) est positif,

les moyens de calcul comportant des moyens additionneurs (256) pour additionner alors la vitesse de référence stockée dans la mémoire vive de la première voie et la vitesse relative calculée par la deuxième voie, ces moyens additionneurs (256) fournissant à un dispositif de visualisation (257) la vitesse absolue cherchée.

2. Dispositif cinémométrique selon la revendication 1, caractérisé en ce que lesdits moyens (230) de calcul comprennent, outre ladite mémoire vive (270), un microprocesseur (280) susceptible de recevoir, d'une part, d'une première unité (231) de traitement numérique, un signal numérisé représentatif du signal Doppler fourni par le premier cinémomètre (210), et, d'autre part, d'une deuxième unité (232) de traitement numérique, un signal numérisé représentatif du signal Doppler fourni par le deuxième cinémomètre (220), ledit microprocesseur (280) effectuant, en coopération avec des moyens logiciels stockés dans au moins une mémoire morte (260), le calcul des vitesses de référence $V_R$ et relative dV, et fournissant la vitesse absolue $V = V_R + dV$.

3. Dispositif cinémométrique selon la revendication 2, caractérisé en ce que ledit signal numérisé fourni par le deuxième cinémomètre (220) est un message de m bits comprenant un bit dit de sens, représentatif du signe de la vitesse relative dV.

4. Dispositif cinémométrique selon la revendication 3, caractérisé en ce que ledit message de m bits comprend également un bit de qualité de la mesure.

5. Dispositif cinémométrique selon l'une quelconque des revendications 2 à 4, caractérisé en ce que la fréquence d'horloge desdits moyens (230) de calcul est égale à la fréquence Doppler.

6. Dispositif cinémométrique selon l'une quelconque des revendications 1 à 5, caractérisé en ce que lesdits moyens (230) de calcul disposent de moyens (255) pour effectuer, au cours d'une mesure de la vitesse relative dV, une moyenne de toutes les valeurs mesurées pour ladite vitesse relative.

7. Dispositif cinémométrique selon l'une quelconque des revendications 1 à 6, caractérisé en ce que le premier cinémomètre (210) fournit une mesure de la vitesse de référence $V_R$ par la mesure par effet Doppler du défilement du sol.

8. Dispositif cinémométrique selon l'une quelconque des revendications 1 à 7, caractérisé en ce que les moyens (250) de calcul comportent des moyens (254) de discrimination qui éliminent de la mesure des valeurs successives de la vitesse relative dont la différence est supérieure à un seuil donné (S).

9. Dispositif cinémométrique selon l'une quelconque des revendications 1 à 8, caractérisé en ce que le deuxième cinémomètre (220) a effet Doppler comporte au moins un capteur passif de proximité commandant des moyens d'enclenchement-déclenchement dudit deuxième cinémomètre.

**Patentansprüche**

1. Geschwindigkeitsmesser zum Messen der Absolutgeschwindigkeit (V) eines zu kontrollierenden Fahrzeugs (100) umfassend einen an Bord eines Kontrollfahrzeugs (200) befindlichen ersten Geschwindigkeitsmesser (210) der Bauart mit Nutzung des Doppler-Effekts zum Messen der Referenzgeschwindigkeit ($V_R$) des Kontrollfahrzeuges (200) und einem zweiten Geschwindigkeitsmesser (220) der Bauart mit Nutzung des Doppler-Effekts zum Messen der Relativgeschwindigkeit (dV) des zu kontrollierenden Fahrzeuges bezüglich des Kontrollfahrzeuges (200) beim Überholen des Kontrollfahrzeuges (200) durch das zu kontrollierende Fahrzeug (100), Mittel (231,232, 230,257), welche mit dem ersten und dem zweiten Geschwindigkeitsmesser (210,220) verbunden sind, um eine Anzeige der Absolutgeschwindigkeit des zu kontrollierenden Fahrzeugs in Abhängigkeit von den Meßwerten der genannten Geschwindigkeitsmesser (210,220) zu liefern, dadurch **gekennzeichnet**, daß diese Mittel Rechenmittel (230) mit zwei Wegen umfassen, nämlich einem Weg, welcher ein von dem ersten Geschwindigkeitsmesser (210) stammendes Signal verarbeitet und einen dynamischen Speicher (270) aufweist, in welchem die berechnete Referenzgeschwindigkeit ($V_R$) gespeichert wird, und einem anderen Weg, der das von dem zweiten Geschwindigkeitsmesser (220) stammende Signal verarbeitet und Mittel (232) zum Erfassen des Vorzeichens der von dem zweiten Geschwindigkeitsmesser gemessenen Relativgeschwindigkeit (dV) aufweist, wobei diese Rechenmittel ferner Mittel zum Bilden von Unterbrechern (241,242) aufweist, welche von den Mitteln (233) zum Erfassen des Vorzeichens gesteuert sind und ihrerseits den ersten und den zweiten Rechenweg derart steuern, daß

- die Referenzgeschwindigkeit ($V_R$), welche in dem dynamischen Speicher (270) gespeichert ist, ständig aktualisiert wird, solange das Vorzeichen der Relativgeschwindigkeit (dV) negativ ist;
- die Aktualisierung der Referenzgeschwindigkeit ($V_R$) suspendiert wird, wenn die Relativgeschwindigkeit (dV) positiv ist,

wobei die Rechenmittel Addiermittel (256) zum Addieren der im dynamischen Speicher des ersten Weges gespeicherten Referenzgeschwindigkeit und der im zweiten Weg berechneten Relativgeschwindigkeit umfaßt, und wobei die Rechenmittel (256) eine Anzeigevorrichtung (257) für die gewünschte Absolutgeschwindigkeit speisen.

2. Geschwindigkeitsmeßvorrichtung nach Anspruch 1, dadurch **gekennzeichnet**, daß die genannten Rechenmittel (230) außer dem genannten dynamischen Speicher (270) einen Mikroprozessor (280) umfassen, der von einer ersten numerischen Bearbeitungseinheit (231) ein für das von dem ersten Geschwindigkeitsmesser (210) gelieferte Doppler-Signal repräsentatives digitalisiertes Signal und von einer zweiten numerischen Verarbeitungseinheit (232) ein für das vom zweiten Geschwindigkeitsmesser (220) gelieferte Doppler-Signal repräsentatives digitalisiertes Signal aufnimmt, wobei der genannte Mikroprozessor (230) im Zusammenwirken mit logischen Mitteln, welche in mindestens einem statischen Speicher (260) gespeichert sind, die Referenzgeschwindigkeit $V_R$ und die Relativgeschwindigkeit dV berechnen und die Absolutgeschwindigkeit $V = V_R - dV$ liefern.

3. Geschwindigkeitsmeßvorrichtung nach Anspruch 2, dadurch **gekennzeichnet**, daß das von dem zweiten Geschwindigkeitsmesser (220) gelieferte digitalisierte Signal m Bits umfassend ein Vorzeichen-Bit aufweist, welches für das Vorzeichen der Relativgeschwindigkeit dV repräsentativ ist.

4. Geschwindigkeitsmeßvorrichtung nach Anspruch 3, dadurch **gekennzeichnet**, daß das Signal aus m Bits ferner ein Bit betreffend die Qualität der Messung umfaßt.

5. Geschwindigkeitsmeßvorrichtung nach einem der Ansprüche 2 bis 4, dadurch **gekennzeichnet**, daß die Taktfrequenz der genannten Rechenmittel (230) gleich der Doppler-Frequenz ist.

6. Geschwindigkeitsmeßvorrichtung nach einem der Ansprüche 1 bis 5, dadurch **gekennzeichnet**, daß die genannten Rechenmittel (230) Mittel (255) aufweisen, um während der Messung der Relativgeschwindigkeit dV einen Mittelwert aller Meßwerte für die Relativgeschwindigkeit zu bilden.

7. Geschwindigkeitsmeßvorrichtung nach einem der Ansprüche 1 bis 6, dadurch **gekennzeichnet**, daß die erste Geschwindigkeitsmeßvorrichtung (210) einen Meßwert für die Referenzgeschwindigkeit $V_R$ durch Messung unter Nutzung des Doppler-Effektes bezüglich der Bewegung relativ zum Untergrund liefert.

8. Geschwindigkeitsmeßvorrichtung nach einem der Ansprüche 1 bis 7, dadurch **gekennzeichnet**, daß die Rechenmittel (250) Diskriminiermittel (254) umfassen, welche aus einer Reihe von aufeinanderfolgenden Geschwindigkeitsmeßwerten der Relativgeschwindigkeit solche Meßwerte eliminieren, deren Abweichung größer als ein vorgegebener Schwellenwert (S) ist.

9. Geschwindigkeitsmeßvorrichtung nach einem der Ansprüche 1 bis 8, dadurch **gekennzeichnet**, daß der zweite Geschwindigkeitsmesser (220) der Bauart mit Nutzung des Doppler-Effekts mindestens einen passiven Näherungsaufnehmer aufweist, welcher Mittel zum Einschalten/Abschalten des genannten zweiten Geschwindigkeitsmessers steuert.

**Claims**

1. Traffic speed radar apparatus for measuring the absolute speed (V) of a vehicle (100) to be checked, the apparatus comprising, on board a checking vehicle (200), a first Doppler effect speed radar (210) for measuring the reference speed ($V_R$) of said checking vehicle (200), and a second Doppler effect speed radar (220) for measuring the relative speed (dV) of said vehicle to be checked relative to the checking vehicle (200) while the checking vehicle (200) is being overtaken by the vehicle (100) to be checked, display means (231, 232, 230, 257) connected to the first and second speed radars (210, 220) responsive to the measurements of said speed radars (210, 220) to provide a display of the absolute speed of the vehicle to be checked, the apparatus being characterized in that said display means comprise computation means (230) having two computation paths, one of which processes the signal from the first speed radar (210) and that includes read/write memory (270) in which the computed reference speed (VR) is stored, and the other of which processes the signal from the second speed radar (220) and includes sign detection means (233) for detecting the sign of the relative speed (dV) measured by the second speed radar, the computation means also including switch-forming means (241, 242) controlled by said sign detection means (233) and themselves controlling the first and second computation paths:

to ensure that the reference speed (VR) stored in the read/write memory (270) is permanently updated whenever the sign of the relative speed (dV) is negative; and

to ensure that the updating of the reference speed (VR) is suspended whenever the sign of the relative speed (dV) is positive, the computation means including adder means (256) for then adding together the reference speed stored in the read/write memory of the first path and the relative speed as calculated by the second path, said adder means (256) providing a display device (257) with the looked-for absolute speed.

2. Traffic speed radar apparatus according to claim 1, characterized in that, in addition to said read/write memory (270) said computation means (230) comprise a microprocessor (280) suitable for receiving firstly, from a first digital processor unit (231), a digitized signal representative of the Doppler signal provided by the first speed radar (210), and secondly, from a second digital processor unit (232), a digitized signal representative of the Doppler signal provided by the second speed radar (220), said microprocessor (280) cooperating with software means stored in at least one read-only memory (260) to compute the reference speed $V_R$ and the relative speed dV, and to provide the absolute speed $V = V_R - dV$.

3. Traffic speed radar apparatus according to claim 2, characterized in that said digitized signal provided by the second speed radar (220) is an m-bit message including a direction bit representative of the sign of the relative speed dV.

4. Traffic speed radar apparatus according to claim 3, characterized in that said m-bit message also includes a bit representing measurement quality.

5. Traffic speed radar apparatus according to any one of claims 2 to 4, charactired in that the clock frequency of said computation means (230) is equal to the Doppler frequency.

6. Traffic speed radar apparatus according to any one of claims 1 to 5, characterized in that said computation means (230) include means (255) for operating during a measurement of the relative speed dV to average all of the measured values of said relative speed.

7. Traffic speed radar apparatus according to any one of claims 1 to 6, characterized in that the first speed radar (210) provides a measure of the reference speed $V_R$ by using the Doppler effect to measure the apparent speed of the ground.

8. Traffic speed radar apparatus according to any one of claims 1 to 7, characterized in that the computation means (250) include discriminator means (254) that eliminate from the measurement successive values of relative speed for which the difference is greater than a given threshold (S).

9. Traffic speed radar apparatus according to any one of claims 1 to 8, characterized in that the second Doppler effect speed radar (220) includes at least one passive proximity sensor controlling means for switching said second speed radar on and off.

FIG.1a

FIG.1b

$$V = V_R + \overline{dV}$$

FIG.2